(19) Europäisches Patentamt
European Patent Office
Office européen des brevets

(11) **EP 2 431 885 A1**

(12) **EUROPEAN PATENT APPLICATION**

(43) Date of publication:
**21.03.2012 Bulletin 2012/12**

(51) Int Cl.:
***G06F 13/28*** (2006.01)  ***H04L 29/08*** (2006.01)
***G06F 9/54*** (2006.01)

(21) Application number: **11181573.4**

(22) Date of filing: **16.09.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **17.09.2010 JP 2010209961**

(71) Applicant: **Fujitsu Limited**
**Kawasaki-shi, Kanagawa 211-8588 (JP)**

(72) Inventors:
• **Kawashima, Takahiro**
**Kanagawa, 211-8588 (JP)**
• **Tanaka, Minoru**
**Kanagawa, 211-8588 (JP)**

(74) Representative: **HOFFMANN EITLE**
**Patent- und Rechtsanwälte**
**Arabellastraße 4**
**81925 München (DE)**

(54) **Communication apparatus, system, method, and recording medium of program**

(57) A communication apparatus including a memory, a processor, and a communication interface, wherein the memory stores a number of hops on a communication route from the communication apparatus to another communication apparatus, the processor selects from at least two communication protocols a communication protocol having a shorter transfer time than another communication protocol, where the transfer time is predicted based on the number of hops on the communication route from the communication apparatus to the other communication apparatus and a data size of the data, and controls transmission of the data using the selected communication protocol, and the communication interface transmits the data to the other communication apparatus based on the control of the processor.

FIG. 1

**Description**

CROSS-REFERENCE TO RELATED APPLICATIONS

This application is based upon and claims the benefit of priority of the prior Japanese Patent Application No. 2010-209961, filed on September 17, 2010, the entire contents of which are incorporated herein by reference.

FIELD

The embodiments disclosed herein relate to a communication apparatus, system, method, and recording medium of program.

BACKGROUND

A communication technology for transferring data stored in a memory in one computer to a memory in another computer is called "Remote Direct Memory Access" (RDMA). When performing data transfer using the RDMA, data is transferred to a memory area of a designated destination according to a procedure, such as an eager protocol or a rendezvous protocol.
For data transfer, for example, there is a technology of specifying a message length threshold for changing protocols (see, for example, "IBM System Blue Gene Solution: Application Development", page 5, fifth ed., June, 2007).

SUMMARY

According to an aspect of the invention, an apparatus including a memory, a processor, and a communication interface, wherein the memory stores a number of hops on a communication route from the communication apparatus to another communication apparatus, the processor selects from the at least two communication protocols a communication protocol having a shorter transfer time than that of another communication protocol, where the transfer time is predicted based on the number of hops on a communication route from the communication apparatus to the other communication apparatus and the data size of the data, and controls transmission of the data using the selected communication protocol, and the communication interface transmits the data to the other communication apparatus based on the control of the processor.
The object and advantages of the invention will be realized and attained by at least the elements, features, and combinations particularly pointed out in the claims.
It is to be understood that both the foregoing general description and the following detailed description are example and explanatory and are not restrictive of the invention, as claimed.

BRIEF DESCRIPTION OF DRAWINGS

FIG. 1 illustrates an example eager protocol;
FIG. 2 illustrates an example rendezvous protocol;
FIG. 3 illustrates an example number of hops;
FIG. 4 illustrates an example fat tree network;
FIG. 5 illustrates an example connection of computers for forming a mesh network;
FIG. 6 illustrates an example connection of computers for forming a torus network;
FIG. 7 illustrates an example configuration of a computer system according to a first embodiment;
FIG. 8 illustrates an example hardware configuration of a computer according to the first embodiment;
FIG. 9 illustrates an example functional configuration of the computer according to the first embodiment;
FIG. 10 illustrates an example configuration of a hop number management table;
FIG. 11 illustrates an example flowchart of a procedure for transmitting data to be executed by a sending computer;
FIG. 12 illustrates an example flowchart of a procedure for receiving data to be executed by a receiving computer;
FIG. 13 illustrates an example functional configuration of a job management apparatus;
FIG. 14 illustrates an example configuration of a coordinate information storage unit;
FIG. 15 is an example functional configuration of a computer according to a second embodiment; and
FIG. 16 is an example sequence of a procedure at the start of application execution in the second embodiment.

DESCRIPTION OF EMBODIMENTS

Hereinafter, embodiments of the present invention will be described with reference to the drawings. First, a technical idea of the present embodiment will be described.

Transfer of data stored in a main memory of a computer to a main memory of a remote computer by a direct memory access (DMA) is called a remote direct memory access (RDMA). When data d1 on the region r1 on the main memory of one computer c1 is transferred to the region r2 on the main memory of another computer c2 by using RDMA write (a request for writing data, which is called "put"), the computer c1 needs to know a virtual address of the region r2. In addition, data transfer is not always performed between the same regions. In other words, either data transfer from a region r1' to a region r2' or data transfer from a region r1" to a region r2" may be performed. When transferring data using RDMA, an eager protocol or a rendezvous protocol is employed.

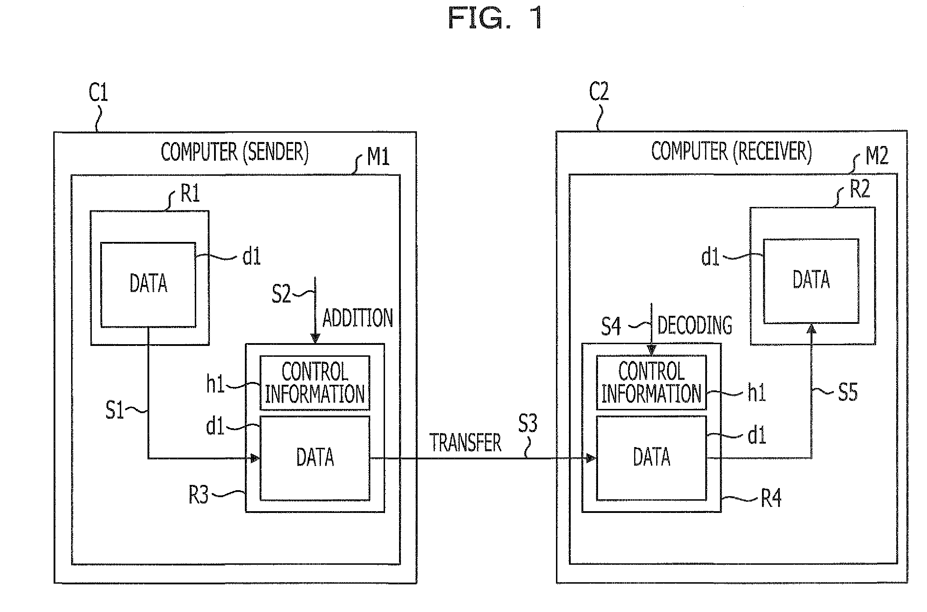

FIG. 1 is a diagram illustrating the eager protocol in the present embodiment.

In this figure, both the computer C1 and the computer C2 have their own RDMA communication functions and are connected together through a network, such as an interconnect network. Now, a procedure for transferring data from the computer C1 to the computer C2 using the eager protocol will be described with reference to FIG. 1.

The computer C1 performs a memory copy operation where data d1, which is intended to be transferred and stored in a region R1 in a main memory M1, is copied into a transmission buffer R3 in a main memory M1 (S1). The computer C1 adds control information h1 to the front or back of data d1 in the transmission buffer R3 (S2). The control information h1 includes, for example, an eager protocol identifier. The computer C1 transfers the data d1 and the control information h1 from the transmission buffer R3 to a receive buffer R4 in the main storage M2 of the computer C2 (S3). Here, the computer C1 knows a virtual address of the receive buffer R4 in advance.

The computer C2 decodes the control information h1 in the receive buffer R4 (S4). Subsequently, the computer C2 determines a storage region (region R2) and performs a memory copy operation where the data d1 is copied into the region R2 in the main storage M2 (S5). In the operation S5, the computer C2 may also perform another process, such as evacuation of data d1 to an evacuation region (not shown) until the storage region is determined.

For transferring the data d1 in FIG. 1, a time required for communication with the eager protocol (T_Eager) is represented by, for example, the following equation (E):

$$T\_Eager = (D/W) + (L\_1 + D/B) + (D/W) + S\_Eager \ldots (E)$$

wherein D represents a data size (byte); W represents a memory copy bandwidth (byte/sec); B represents an interconnect bandwidth (RDMA communication bandwidth) (byte/sec); L_1 represents a communication delay on the interconnect network with RDMA (sec); and S_Eager represents a software overhead time in the eager protocol (sec).

Here, the first term on the right side of the equation (E), (D/W), represents a time required for the memory copy operation in the operation S1. The second term of the equation (E), (L_1 + D/B), represents a time required for the data transfer in the operation S5. The third term of the equation (E), (D/W), represents a time required for the memory copy operation in the operation S5. The fourth term of the equation (E), S_Eager, represents an overhead time required for the software process including the operations S2, S4, and so on.

Here, the term "communication delay of L_1" means an overhead time of a hardware required for a 0-byte data transfer.

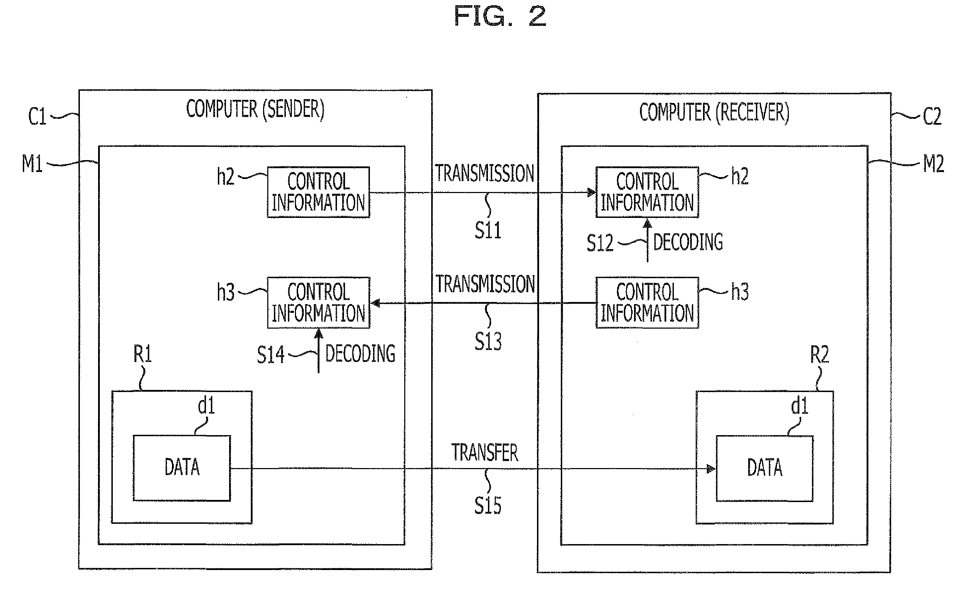

On the other hand, FIG. 2 is a diagram illustrating an example rendezvous protocol in the present embodiment.

The relationship between the computer C1 and the computer 2 is substantially the same as one illustrated in FIG. 1. Referring now to FIG. 2, a process for transferring data from the computer C1 to the computer C2 using the rendezvous protocol.

The computer C1 transmits control information h2 to the computer C2 (S11). The control information h2 includes, for example, a rendezvous protocol identifier. Upon receiving the control information h2, the computer C2 decodes the control information h2 (S12). The computer C2 transmits control information h3 to the computer C1 (S13). The control information h3 includes, for example, a virtual address or the like of the receiving region R2 in the main memory M2.

Upon receiving the control information h3, the computer C1 decodes the control information h3 and acquires the virtual address or the like of the region R2 (S14). The computer C1 transfers data d1, which has been stored in the region R1 in the main storage M1, is transferred to the region R2 of the computer C2 (S15).

In FIG. 2, for transferring the data d1, a time required for communication with the rendezvous protocol is represented by, for example, the following equation (R):

$$T\_Rendezvous = L\_2 \times 2 + (L1 + D/B) + S\_Rendezvous \dots (R)$$

wherein D represents a data size (byte); B represents an interconnect bandwidth (RDMA communication bandwidth) (byte/sec); L_1 represents a communication delay on the interconnect network with RDMA (sec); L_2 represents a communication delay on interconnect control communication (sec); and S_Rendezvous represents a software overhead time in the rendezvous protocol (sec).

Here, the first term of the equation (R), L_2 x 2, represents a time required for transmission/reception of control information h2 or h3 in the operations S11 and S13. Since the data sizes of control information h2 and h3 are very small, the time required for transmission/reception thereof may be only a communication delay of L_2. The second term of the equation (R), (L_2 + D/B) represents a time required in the operation S15. The third term of the equation (R), S_Rendezvous, represents an overhead time required for the software process including the operations S12, S14, and so on.

For the equations (E) and (R), in the case where the network topology is one in which communication times among arbitrary nodes (computers) are substantially equal, in general, the values of W, B, L_1, L_2, S_Eager, and S_Rendezvous are determined depending on the characteristics of the hardware and software. Therefore, these parameter values may be almost constant regardless of a combination of computers to be communicated to each other.

In a typical network state, the more the data size becomes small, the more the relationship between T_Eager and T_Rendezbous becomes T_Eager < < T_Rendezvous. On the other hand, more the data size D becomes large, the more the relationship between T_Eager and T_Rendezbous becomes T_Eager >> T_Rendezvous. This will be evident when comparing between a case where zero (0) is substituted for D and a case wheres ∞ (infinite) is substituted for D, in each of the equations for T_Eager and T_Rendezvous.

Each of the equations (E) and (R) is a linear expression for data size D. Therefore, the threshold of data size D,D_Threshold, for switching the eager protocol and the rendezvous protocol may be obtained by solving for D from each of the equations (E) and (R) with respect to D under the conditions of T_Eager = T_Rendezvous. The result is represented by the following formula (Dt1):

$$D\_Threshold = (L\_2 + (S\_Rendezvous - S\_Eager) / 2) \times W \dots (Dt1)$$

When times required for communications among arbitrary networks are substantially constant, for example, the times required for communications may be prevented by switching protocols depending on whether the size of data to be transferred is larger or smaller than the obtained "D_Threshold", which is obtained by substitution of the values of W, L_2, S_Eager, and S_Eager as constant values.

However, for example, the number of communications required for data transfer varies depending on the protocols. Thus, the communication delay between a destination and a source affects a time required for data transfer with different degrees depending on the protocols. Therefore, even if the protocol to be used for data transfer is selected depending on the size of data to be transferred, the use of another protocol, which is not selected, may reduce a time required for data transfer depending on the communication delay.

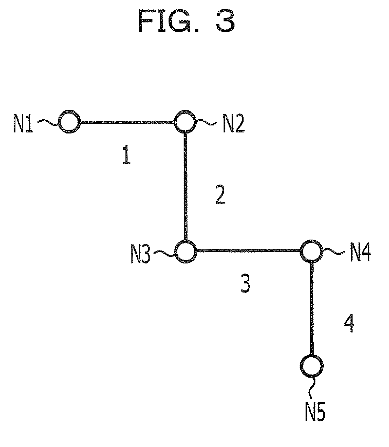

FIG. 3 is a diagram illustrating the number of hops.

The term "number of hops H" means the number of connections on the communication pathway between two computers Ci. Nodes N1 to N5 are computers, switches, or the like. For example, the number of hops H is four when node N1 is a source and node N5 is a destination.

The network topology may be, for example, a fat tree, mesh, or torus network topology.

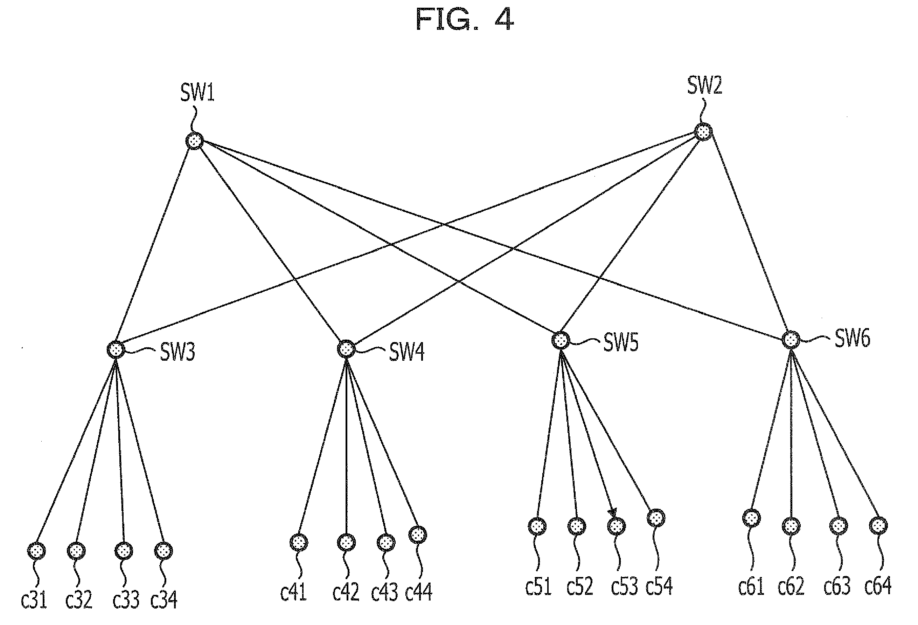

FIG. 4 is a diagram illustrating an example fat tree network topology. In the fat tree illustrated in this figure, root switches SW1 and SW2 serve as root nodes. Each of leaf switches SW3 to SW6 are connected to both the root switches SW1 and SW2. The leaf switches SW3 to SW6 are connected to computers c31 to c34, c41 to c44, c51 to c54, and c61 to c64 as computer nodes, respectively.

In the network topology of the usual tree, there is only one root node. Thus, communication loads are concentrated around the root node, thereby causing a decrease in communication performance. In order to avoid the disadvantage of the usual tree, two or more root nodes are arranged in the fat tree network topology.

In the fat tree network, the values of W, B, S_Eager, and S_Eager may be substantially constant. The values of L_1 and L_2 are expected to be different due to a difference in number of hops H between a case of communication through the root node (for example, communication between c31 and c64 or communication between c31 and c51) and a case of communication without the root node (for example, communication between c31 and c32). However, it is expected about almost all the communication nodes (to c31, it is c41 to c44, c51 to c54, and c61 to c64) by which a communication destination is included in a fat tree network that it is almost the same value.

Therefore, when computers C1 and C2 illustrated in FIG. 1 or 2 are arranged as compute node in the fat tree, a time required for communication between the computer C1 and the computer C2 may be shortened by switching the eager protocol and the rendezvous protocol and using the selected one depending on the data size D of the data d1.

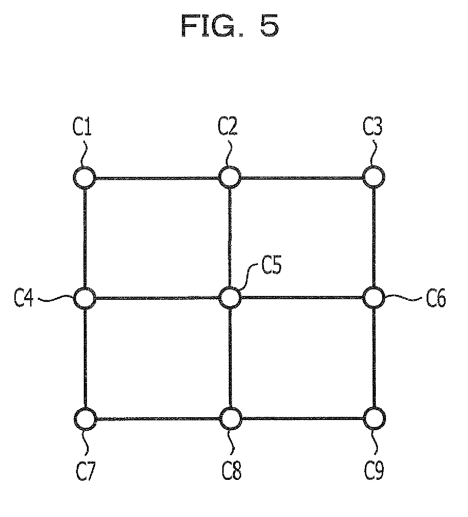

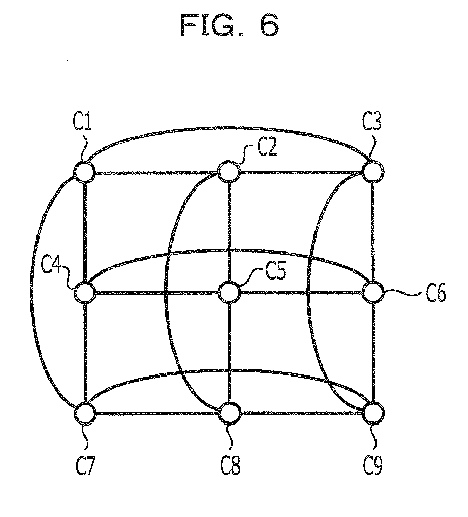

FIG. 5 is a diagram illustrating an example connection where computers C1 to C9 form a mesh network. FIG. 6 is a diagram illustrating an example connection where computers C1 to C9 form a torus network. Each line connecting between computers Ci represent an interconnect connecting between computers Ci on the opposite ends of the line.

Here, a two-dimensional mesh network is represented in FIG. 5, while a two-dimensional torus network is represented in FIG. 6. However, it is noted that the dimension numbers of the respective networks are not limited to specific ones.

As illustrated in FIG. 5 and FIG. 6, the number of hops between an arbitrary node in each of the mesh and torus networks is not limited to a specific one.

Depending on the network topology, the values of L_1 and L_2 vary for different combinations of computers that communicate with each other. Each of the parameter, L_1 and L_2, is represented as a linear function of the number of hops H between the computers that communicate with each other.

$$L\_1 = L\_1N + A\_1 \times H \ldots (L1)$$

$$L\_2 = L\_2N + A\_2 \times H \ldots (L2)$$

Here, A_1 and A_2 represent increments of communication delay (RDMA communication delay) per hop (sec/hop) on an interconnect. Although the values of A_1 and A_2 are agreement, the equation (L1) and the equation (L2) are provided with different variables for generalization.

L_1N and L_2N are the overhead times (sec) of hardware in the communication delay of a first hop (between a sender and the adjacent node), respectively.

The values of A_1, A_2, L_1N, and L_2N may be measured in advance by a computer system actually used. Specifically, an increment of communication delay may be measured every time the number of hops is incremented by one at the time of communication using the eager protocol. The value of L_1N may be obtained by subtracting A_1 x H from the actual communication delay in the communication with the number of hops H using the eager protocol.

Similarly, the value of A_2 may be measured as an increment of communication delay every time the number of hops is incremented by one at the time of communication using the rendezvous protocol. The value of L_2N may be obtained by subtracting A_2 x H from the actual communication delay in the communication with the number of hops H using the rendezvous protocol.

The fact that the values of L_1 and L_2 are influenced by the number of hops H means that the threshold value, D_Threshold, is also influenced by the number of hops H. Therefore, the threshold value, D_Threshold, calculated by the equation (Dt1) is insufficient for the network topology that does not treat the value of L_1 or L_2 as a constant. In other words, there is a possibility of further improving a communication performance by devising a method for calculating the threshold value, D_Threshold.

Thus, the equations (L1) and (L2) are substituted into the equations (E) and (R) to obtain the following equations (Eh) and (Rh), respectively.

$$T\_Eager = (D/W) \times 2 + (L\_1N + A\_1 \times H) + D/B + S\_Eager \ldots (Eh)$$

$$T\_Rendezvous = (L\_2N + A\_2 \times H) \times 2 + (L\_1N + A\_1 \times H) + D/B$$
$$+ S\_Rendezvous \ldots (Rh)$$

That is, both T_Eager and T_Rendezvous serve as linear expressions of the number of hops H, respectively.

The threshold value, D_Threshold, which switches between the eager protocol and the rendezvous protocol, may be obtained by solving the equations (Eh) and (Rh) for D under the condition of T_Eager = T_Rendezvous.

Namely, from

$$(2/W) \times D = (L\_2N + A\_2 \times H) \times 2 + (S\_Rendezvous - S\_Eager),$$

the following equation (Dt2) is derived:

$$D\_Threshold = [A\_2 \times H + L\_2N + (S\_Rendezvous - S\_Eager) / 2]$$
$$\times W...(Dt2)$$

According to the present embodiment, the communication protocol to be used is switched depending on a comparison between the calculation result of the equation (Dt2) and the size of data D. Here, the equation (Dt2) is one derived considering that the values of L_1 and L_2 may be changed depending on the number of hops. Thus, according the threshold value, D_Threshold, based on the equation (Dt2), the communication protocol to be used may be selected in consideration of not only the size of data D but also the number of hops H between computers that communicate with each other. As a result, an improvement in communication performance may be expected in a network topology, especially in a mesh or torus network topology, compared with the case where the communication protocol is selected based on the equation (Dt1).

Now, an example specific computer on which the above consideration is applied will be described.

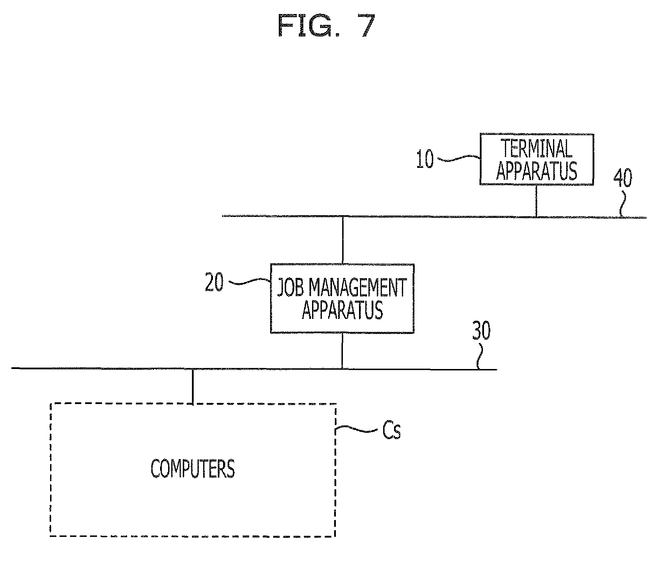

FIG. 7 is a diagram illustrating an example configuration of a computer system according to a first embodiment. In this figure, a job management apparatus 20 and computers Cs are connected to each other through a network 30, such as a local area network (LAN).

The job management apparatus 20 is a computer that performs procedures of, for example, receiving an input of job from a user, determining the order of allocating input jobs for the computers Cs (dispatch order), and dispatching the jobs. The input of a job may be received by directly operating the job management apparatus 20 or by communication with a terminal apparatus 10 through a network 40. The job management apparatus 20 is an example of an information processing apparatus 20. The computers Cs are a set of distributed memory parallel computers.

Each computer Ci (hereinafter, "i" represents an integer number and each computer is provided with its own number) is connected to other computers through a line (network), such as an interconnect line, and has a RDMA communication function.

For example, in the computers Cs, computers are connected to one another with a mesh or torus network topology.

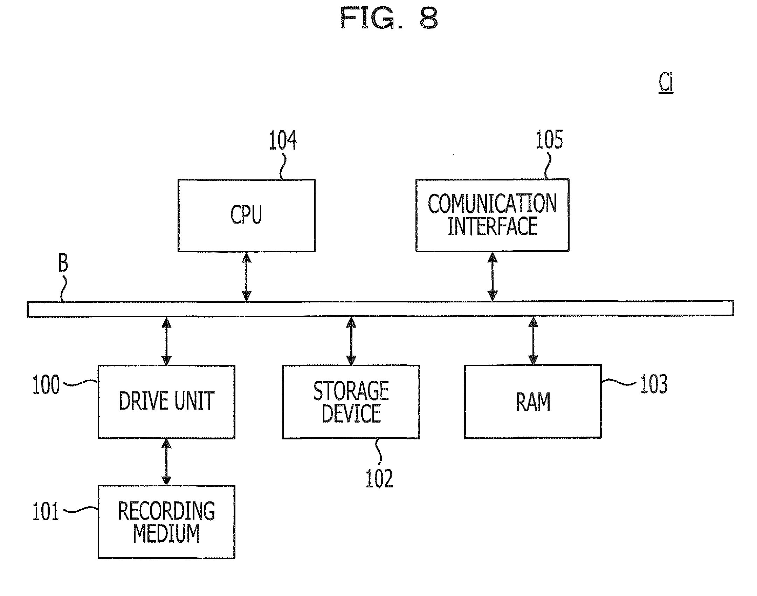

FIG. 8 is a diagram illustrating an example hardware configuration of a computer. In this figure, the computer Ci includes a drive unit 100, a storage device 102, a RAM 103, a CPU 104, and a communication interface 105, which are mutually connected to one another through a bus B.

A program to be executed in the computer Ci may be supplied by a recording medium 101, such as a CD-ROM. When the recording medium 101, which stores the program, is mounted on the drive unit 100, the program is installed from the recording medium 101 into the storage device 102 through the drive unit 100. However, it is not necessary to install the program from the recording medium 101. The program may be downloaded from another computer through a network. The storage device 102 stores required files, data, and so on as well as the installed program.

The RAM 103 reads and stores the program from the storage device 102 when the program is instructed to be started. The CPU 104 performs functions related to the computer Ci according to the program stored in the main memory unit 103. The communication interface 105 is used as an interface for connecting to a network (interconnect).

In addition, the terminal apparatus 10 and the job management apparatus 20 may also have the hardware configuration illustrated in FIG. 8. In each of the terminal apparatus 10 and the job management apparatus 20, a specified program is read from the storage device 102 and then stored in the RAM 103, followed by being executed by the CPU 104.

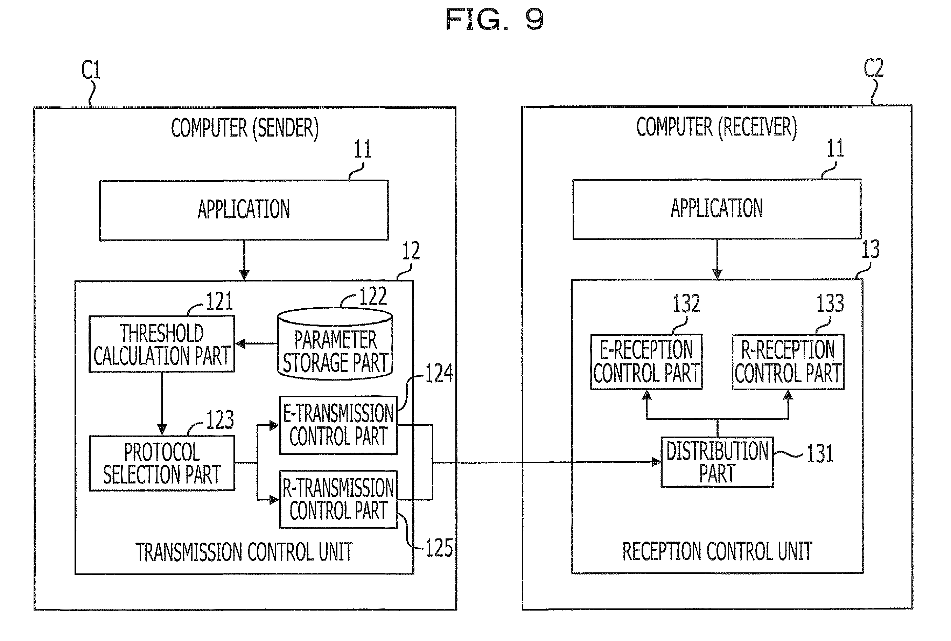

FIG. 9 is a diagram illustrating an example functional configuration of the computer according to the first embodiment. In this figure, the computer C1 is a data sender and the computer C2 is a data receiver.

The computer C1 includes an application 11, a transmission control unit 12, and so on. The application 11 is a program that performs a specified process using RDMA communication. For example, the job management unit 20 starts each application 11 as a process in the computer Ci.

The transmission control unit 12 controls data transmission by the RDMA in response to a request for data transmission from the application 11. The transmission control unit 12 is realized by a process that makes the CUP 104 of the computer C1 execute a program installed in the computer C1. The transmission control unit 12 is mounted as, for example, part of a message passing interface (MPI) library.

In FIG. 9, the transmission control unit 12 includes a threshold calculation part 121, a parameter storage part 122, a protocol selection part 123, an E-transmission control part 124, and an R-transmission control part 125 grade.

The threshold calculation part 121 calculates a threshold value, D_Threshold, based on the aforementioned equation (Dt2). The parameter storage part 122 stores various kinds of parameters required for calculating the threshold value, D_threshold, by using, for example, the storage device 102. Specifically, the parameter storage part 122 stores previously measured values or theoretical values of W, L_2N, A_2, S_Randezvous, and S_Eager.

The parameter storage part 122 also stores a hop number management table 122t in which the number of hops H of the shortest communication route from the computer Ci to another computer Ci.

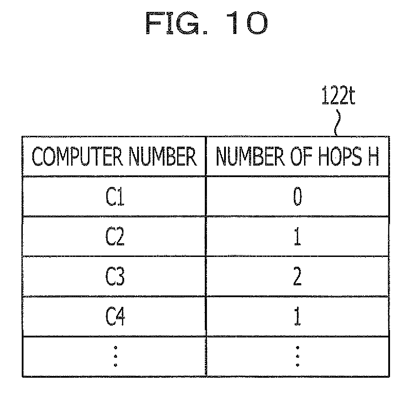

FIG. 10 is a diagram illustrating an example configuration of the hop number management table. As illustrated in this figure, the hop number management table 122t describes the number of hops H for each computer number. The number of hops H is a relative value on the basis of the computer Ci as an origin, which stores the hop number management table 122t. FIG. 10 illustrates an example of storing the number of hops H from the computer C1 to each computer Cj in the case of constituting the mesh in FIG. 5. Here, the computer number is a number for identifying each computer Ci (in a narrow sense, a process of the application 11 that runs in each computer).

The protocol selection unit 123 selects a communication protocol to be used. The selection is based on a comparison between the size of data, where the transmission thereof is requested by the application 11, and the threshold value, D_Threshold, calculated by the threshold calculation part 121. The E-transmission control part 124 controls a process for transmitting data based on an eager protocol. The R-transmission control part 125 controls a process for transmitting data based on a rendezvous protocol.

On the other hand, the receiver computer C2 includes an application 11, a reception control part 13, and so on. The application 11 has been already described above. However, on the receiving end, the application 11 requests data reception to the reception control part 13.

The reception control part 13 controls data reception by the RDMA communication in response to the reception request of data from the application 11. The reception control unit 13 is realized by a process that makes the CPU 104 of the computer C1 execute a program installed in the computer C2. The reception control unit 13 is mounted as, for example, part of the MPI library.

In this figure, the reception control unit 13 includes a distributing part 131, an E-reception control part 132, an R-reception control part 133, and so on. The distributing part 131 determines which one of the communication protocols is selected by the sender and distributes execution entities of the receiving process to the E-reception control unit 132 or the R-reception control unit 133. The E-reception control unit 132 controls a process for receiving data based on the eager protocol. The R-reception control unit 133 controls a process for receiving data based on the rendezvous protocol.

Here, the sender and the receiver are relative to each other. That is, each computer Ci serves as a sender at one time and a receiver at another time. Thus, each computer Ci includes both the transmission control unit 12 and the reception control unit 13. The application 11 of each computer Ci transmits data using the transmission control unit 12 and receives data using the reception control unit 13.

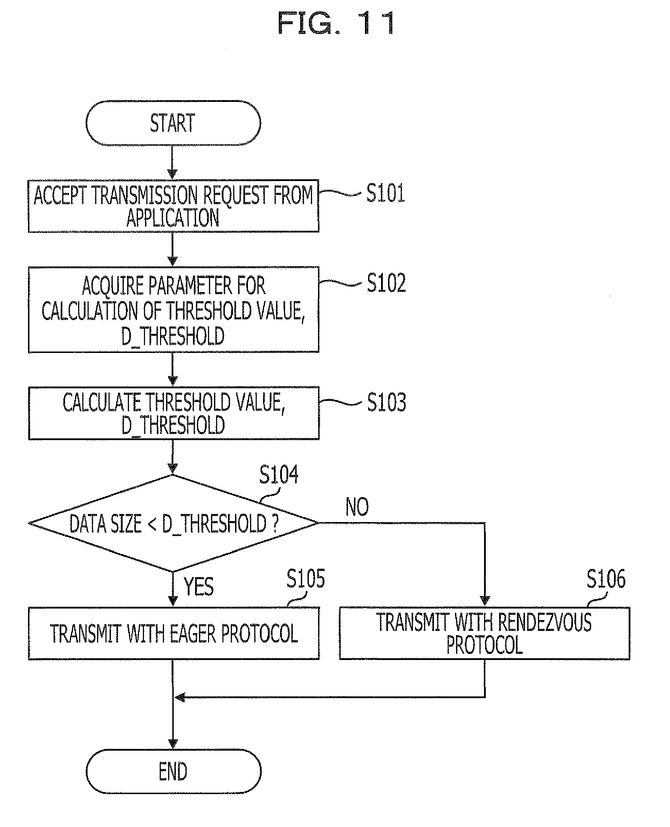

Hereinafter, a process executed by the computer Ci will be described. FIG. 11 is a flowchart illustrating the operations of an example process for transmitting data, which is executed by a sender computer.

In operation S101, the transmission control unit 12 accepts a request for transmission of data d1 from the application 11. The data transmission request specifies parameters, such data d1, the data size D of the data d1, a destination computer number, and so on.

The threshold calculation part 121 acquires W, L_2N, A_2, S_Rendezvous, S_Eager, and the number of hops H, which are parameters for calculating a threshold value D_Threshold, from the parameter storage part 122 (S102). For the number of hops H, a value matched with the computer number of the destination computer Cj is acquired from the hop number management table 122t. The threshold calculation part 121 calculates the threshold value, D_Threshold, by substituting the acquired parameter into the equation (Dt2) (S103).

The protocol selection unit 123 selects a communication protocol to be used, based on a comparison between the data size D of the data and the threshold value, D_Threshold (S104). When the data size D is smaller than the threshold value, D_Threshold ("YES" in S104), the protocol selection part 123 selects the eager protocol. Depending on the selection, the E-transmission control part 124 performs a process for transmitting data d1 through an interconnect by the procedures in operations S1 to S3, which have been described with reference to FIG. 1 (S105).

On the other hand, if the data size D is equal to or more than the threshold, D_Threshold ("NO" in S104), the protocol selection part 123 selects a rendezvous protocol. Depending on the selection, the R-transmission control part 125 performs a process for transmitting data d1 through an interconnect by the procedures in operations S11 to S15, which have been described with reference to FIG. 2 (S106).

Here, in FIG. 11, when the data size D corresponds to the threshold, D_Threshold, the rendezvous protocol is selected. Alternatively, however, the eager protocol may be selected.

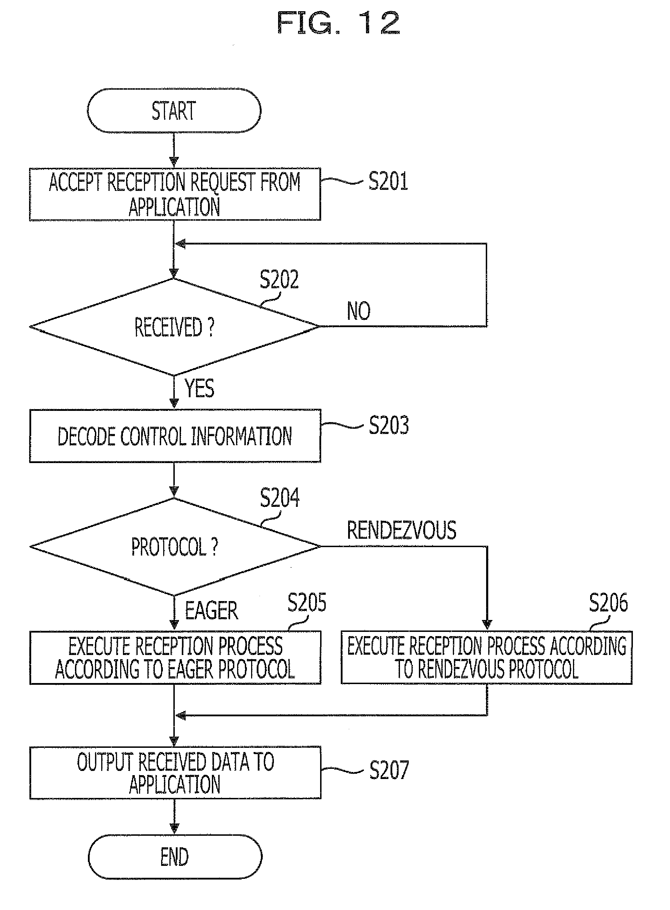

Referring now to FIG. 12, a flow chart illustrating the operations of an example process for receiving data, which is executed by a receiver computer, will be described.

In operation S201, the reception control unit 13 accepts a request for receiving data d1.

The distributing part 131 waits for the reception of information through the interconnect (S202). When the information is received ("YES" in S202), the distributing part 131 decodes the received information to determine which one of communication protocols is selected by the sender (S203). In other words, if the eager protocol is selected by the sender, the information received first is control information h1 and data d1 (see FIG. 1). On the other hand, if the rendezvous protocol is selected, the information received first is control information h2 (see FIG. 2). Therefore, the distributing part 131 decodes control information h1 or control information h2 to determine the communication protocol selected by the sender.

When the distributing part 131 determines that the eager protocol is selected by the sender ("EAGER" in S204), the subsequent reception procedures are taken over to the E-reception control part 132. Thus, the E-reception control part 132 performs a process for receiving data d1 through an interconnect by the procedures in S3 to S5, which have been described with reference to FIG. 1 (S205).

On the other hand, when the distributing part 131 determines that the rendezvous protocol is selected by the sender ("RENDEZVOUS" in S204), the subsequent reception procedures are taken over to the R-reception control part 133. Therefore, the R-transmission control part 133 performs a process for transmitting data d1 through an interconnect by the procedures in operations S11 to S15, which have been described with reference to FIG. 2 (S206).

As described above, according to the first embodiment, the threshold, D_Threshold, for determining the communication protocol to be used is determined in consideration of the number of hops. Here, the threshold value, D_Threshold, may be varied depending on the computer Ci to be served as a communication partner. Therefore, like a mesh or torus network, even if a network topology with a variable communication time between arbitrary nodes, a more effective communication protocol may be selected from a standpoint of communication performance.

Furthermore, the present embodiment is applicable even when the network topology is a fat tree topology. In order to describe this case, both the equation (Dt1) and the equation (Dt2) are represented again below.

$$D\_Threshold = (L\_2 + (S\_Rendezvous - S\_Eager) / 2) \times W \ldots (Dt1)$$

$$D\_Threshold = [A\_2 \times H + L\_2N + (S\_Rendezvous - S\_Eager) / 2] \times W \ldots (Dt2)$$

As is evident from the above, the equations (Dt1) and (Dt2) are different from each other in that L_2 is substituted into the equation (Dt1) and A_2 x H + L_2N is substituted into the equation (Dt2). If a variation in number of hops between arbitrary nodes is small, for example, a fixed value (for example, 0) may be substituted for the number of hops H of the equation (Dt2). In this case, the equation (Dt2) is approximate to the equation (Dt1).

In addition, the equation (Dt2) may be simplified within an acceptable operational range. For example, the software overhead time in the eager protocol and the software overhead time in the rendezvous protocol are negligible in operation. In this case, the following equation (Dt3) obtained by removing (S_Rendezvous-S_Eager)/2 from the equation (Dt2) may be used.

$$D\_Threshold = (A\_2 \times H + L\_2N) \times W \ldots (Dt3)$$

Alternatively, when the value of L_2N is negligible in operation, the following equation (Dt4) obtained by removing L_2N from the equation (Dt2) may be used.

$$D\_Threshold = [A\_2 \times H + (S\_Rendezvous - S\_Eager) / 2] \times W \ldots$$

$$(Dt4)$$

Furthermore, the following equation (Dt5) from which both (S_Rendezvous - S_Eager) / 2, and L_2N were removed may be used.

$$D\_Threshold = (A\_2 \times H) \times W \ldots (Dt5)$$

In other words, when the equation (Dt4) or (Dt2) is used, the threshold, D_Threshold, may be calculated in consideration of the software overhead time. Furthermore, when the equation (Dt3) or (Dt2) is used, the threshold, D_Threshold, may be calculated in consideration of the value of L_2N.

In the first embodiment, each computer Ci stores a hop number management table 122t. The amount of information in the hop number management table 122t increases as the number of computers Ci increases. Furthermore, the contents of the hop number management table 122t are different in the respective computers Ci. Therefore, when using many computers Ci, setting their hop number management tables 122t will become a significant burden. In addition, in the case where the connecting relationship between the computers Ci is changed, a decrease or increase in number of computers Ci occurs, or the like, it is very difficult to update the hop number management table 122t of each computer Ci depending on a new connection configuration of the computers Ci.

Therefore, in a second embodiment, an example simplified maintenance operation of the hop number management table 122t will be described. Furthermore, the second embodiment will be described with respect to different points from the first embodiment. Thus, points which are not specifically mentioned in the following description may be considered the same as those of the first embodiment.

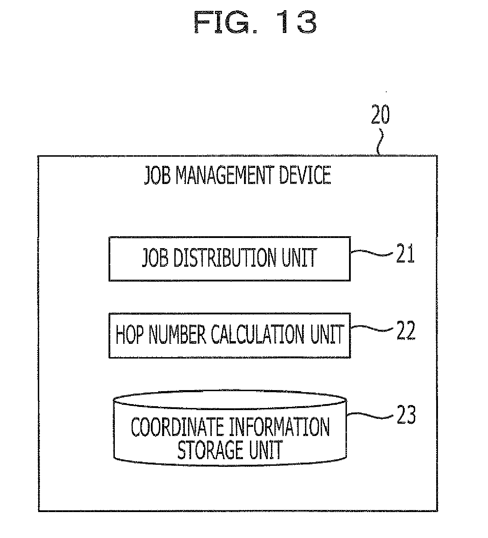

FIG. 13 is a diagram illustrating an example functional configuration of a job management apparatus according to the second embodiment. In this figure, the job management apparatus 20 includes a job distribution unit 21, a hop number calculation unit 22, and a coordinate information storage unit 23, and so on. One computer Ci among computers Cs may include the job distribution unit 21, the hop number calculation unit 22, and the coordinate information storage unit 23 to calculate the number of hops. Alternatively, one computer Ci among the computers Cs may include the hop number calculation unit 22 to calculate the number of hops based on coordinate values stored in the coordinate information storage unit 23 in the job management apparatus.

The job distribution unit 21 accepts an execution instruction of the application 11 from a user and instructs the computer Cn to execute the application 11 (that is, job execution).

The coordinate information storage unit 23 stores coordinate values (position information) of each computer Ci in the coordinate system of a network topology using, for example, the storage device of the job management apparatus 20.

That is, in a mesh or torus network topology, computers Ci are usually arranged in the form of an n-dimensional rectangular parallelepiped on the logical lattice points of an n-dimensional coordinate space. If the n-dimensional coordinate system is expressed as $(x0, x1, \ldots, xn-1)$, the computers Ci are arranged on the n-dimensional rectangular parallelepiped $xi\_min <= xi <= xi\_max$ $(i= 0, \ldots, n-1)$. Therefore, each computer Ci has coordinate values $(x0, x1, \ldots, xn-1)$. The coordinate information storage unit 23 stores the coordinate values for every computer Ci.

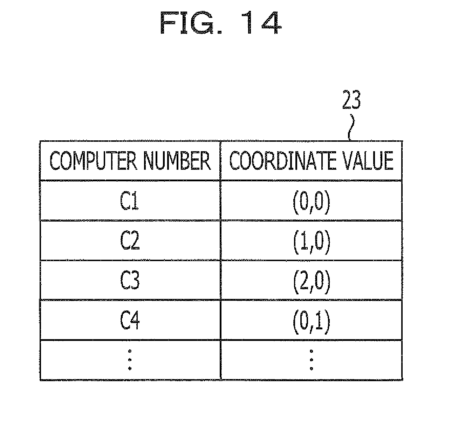

FIG. 14 is a diagram illustrating an example configuration of the coordinate information storage unit. As illustrated in the figure, the coordinate information storage unit 23 stores the coordinate values for every computer number in the network topology coordinate system. This figure illustrates an example in which the coordinate values of the respective computers Ci when the network topology is a two-dimensional mesh topology as illustrated in FIG. 5.

The Hop number calculation unit 22 calculates the number of hops H between the adjacent computers Ci based on their coordinate values stored in the coordinate information storage unit 23. Different network topologies employ different methods for calculating the number of hops H.

The method for calculating the number of hops will be described. In the mesh network topology, a computer Ci located at xi_min and a computer Ci located at xi_max are not directly connected to each other through an interconnect. For example, in FIG. 5, a computer C1 (x1_min, x2_min) and a computer C3 (x1_max, x2_min) are not directly connected to each other. Therefore, when the coordinates of the computer C1 are set to $(x0\_1, x1\_1, \ldots, xn-1\_1)$ and the coordinates of the computer C2 are set to $(x0\_2, x1\_2, \ldots, xn - 1\_2)$, in the n-dimensional rectangular parallelepiped, the number of hops H of the shortest communication route between these computers C1 and C2 is calculated by the following equation

(Hm).

$$\Sigma|xi\_1 - xi\_2| = |x0\_1 - x0\_2| + |x1\_1 - x1\_2| + ... + |xn - 1\_1 - xn - 1\_2| ... (Hm)$$

For example, the number of hops H of the shortest communication route between the adjacent computers is one (1).

On the other hand, in the torus network topology, a computer Ci located at xi_min and a computer Ci located at xi_max are directly connected to each other through an interconnect. For example, in FIG. 6, a computer C1 (x1_min, x2_min) and a computer C3 (x1_max, x2_min) are directly connected to each other. Therefore, the computational expression of the number of hops H of the shortest communication route between the computer C1 and the computer C2 is more complicated.

The length (Diameter_i of the i-dimensional side of the n-dimensional rectangular parallelepiped in the torus network is set to Diameter_i = xi_max - xi_min + 1.

Then, one half (Radius_i) of the length (Diameter_i) is calculated as follows:

$$Radius\_i = (xi\_max - xi\_min + 1)/2$$

In the n-dimensional rectangular parallelepiped, the coordinates of the computer C1 are set to (x0_1, x1_1, ..., xn -1_1) and the coordinates of C2 are set to (x0_2, x1_2, ..., xn - 1_2). In this case, the number of hops H of the shortest communication route between the computer C1 and the computer C2 is calculated by the following equation (Ht1) or (Ht2):

In the case of |xi_1 - xi_2| <= Radius_i

$$\Sigma|xi\_1 - xi\_2| ... (Ht1)$$

In the case of |xi_1 - xi_2| > Radius_i

$$\Sigma(Diameter\_i-|xi\_1-xi\_2|) ... (Ht2)$$

From the above, the hop number calculation unit 22 calculates the number of hops H based on the equation (Hm) when the network topology is a mesh. In addition, the hop number calculation unit 22 calculates the number of hops H based on the equation (Ht1) or (Ht2) when the network topology is a torus.

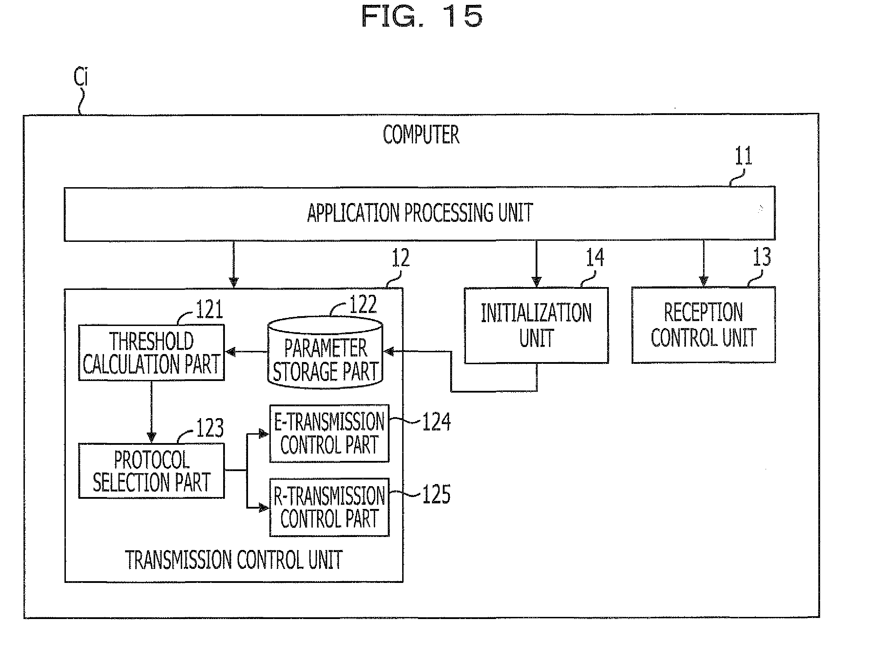

Furthermore, FIG. 15 is a diagram illustrating an example functional configuration of the computer according to the second embodiment. In FIG. 15, the same reference symbols as in FIG. 9 are used to denote substantially corresponding portions and the detailed description thereof will be omitted.

In FIG. 15, the computer Ci further includes an initialization unit 14. The initialization unit 14 performs a desired initialization process before execution of a communication process. The initialization unit 14 acquires the number of hops H or the like from the job management apparatus 20 in the initialization process. That is, the initialization unit is an example acquisition means. For example, the initialization unit 14 is mounted as part of the MPI library. In this case, the initialization unit 14 is equivalent to a function of initialization.

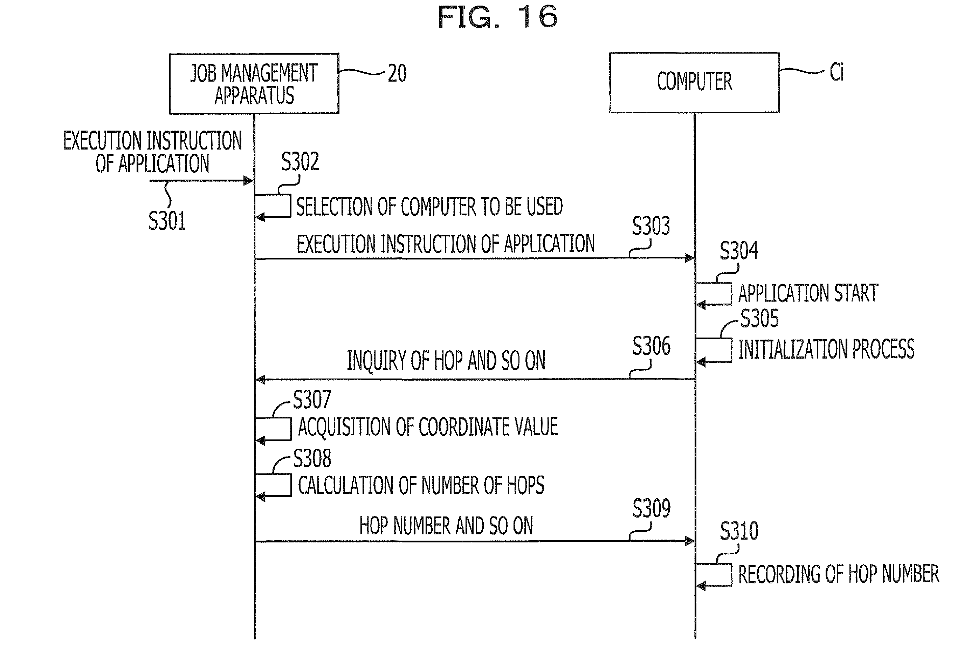

Hereinafter, procedures to be carried by a computer system of the second embodiment will be described. FIG. 16 is an example sequence of a procedure at the start of application execution in the second embodiment.

In operation S301, the job distribution unit 21 of the job management apparatus 20 accepts the execution instruction of application executed by an application processing unit 11 from a user. The number of computers Ci to be used is also specified in the execution instruction.

Among the computers Cs, the job distribution unit 21 selects computers Ci as many as those specified by the user so as to be served as the execution destinations of the application (S302). Specifically, the computer number of the computer Ci used as an execution destination of application is determined. Here the computers Ci may be selected according to the known job scheduling technology or the like. The job distribution unit 21 transmits the execution instruction of the application to each selected computer Ci (S303).

Each computer Ci, which is instructed to execute the application, starts the application (S304). The application requests the initialization process to the initialization unit 14 in response to the start up (S305). The initialization unit 14 inquires the computer numbered and the numbers of hops H of all the computers Ci selected as execution destinations of the application (S306). Here, the inquiry also specifies the computer number of the inquiry source computer Ci.

The hop number calculation unit 22 of the job management apparatus 20 acquires "the computer number of the inquiry source computer Ci" and "the coordinate values of another computer Ci selected as an execution destination of the application " from the coordinate information storage unit 23 (S307). The hop number calculation unit 22 calculates the number of hops H from the inquiry source computer Ci to the other computer Ci based on the acquired coordinate values (S308). In other words, the number of hops H is calculated based on the positional relationship between the inquiry source computer Ci and the other computer Ci. Here, the network topology is statically determined. Thus, it is previously determined which one of the equation (Hm), the equation (Ht1), and the equation (Ht2) is used.

The hop number calculation unit 22 replies with the computer number of the other computer Ci and the number of hops H to the inquiry source computer Ci (S309). If there are two or more other computers Ci, two or more sets of the computer numbers and the number of hops H are replied.

The initialization unit 14 records both the received computer number and the number of hops H on the hop number management table 122t of the parameter storage part 122 (S310).

The subsequent communication process to be performed may be substantially the same as one performed in the first embodiment.

As described above, according to the second embodiment, the numbers of hops H of the other computers ci are automatically registered to the respective computers Ci. Therefore, the work burdens of registering the number of hops H to each computer Ci is remarkably mitigatable. In other words, the administrator or the like may only edit the coordinate information storage unit 23 unitary managed in the job management apparatus 20.

Furthermore, the hop number management table 122t distributed in each computer Ci in the first embodiment may be unitary stored in the job management apparatus 20 instead of the coordinate information storage unit 23. In this case, the number of hops H may be also automatically registered into each computer Ci with substantially the same procedure as one illustrated in FIG. 16. In this case, the hop number calculation unit 22 does not need to calculate the number of hops H. The hop number calculation unit 22 may only reply the number of hops H or the like based on the stored hop number management table 122t about the inquiry source computer Ci.

However, there is a need of preparing the hop number management tables 122t for the respective computers Ci. Thus, the work burden of registering to the coordinate information storage unit 23 may be smaller than the preparation of the hop number management table 122t.

As mentioned above, the example of the present invention has been described. However, the present invention is not limited to the specific embodiments as described above and various modifications and changes are available within the scope of the present invention described in claims.

According to one aspect of the present invention, when selecting an appropriate one from different protocols, it is possible to avoid unwilling selection of a protocol having a communication performance lower than that of the other protocol.

All examples and conditional language recited herein are intended for pedagogical purposes to aid the reader in understanding the principles of the invention and the concepts contributed by the inventor to furthering the art, and are to be construed as being without limitation to such specifically recited examples and conditions. Although the embodiments of the present invention have been described in detail, it should be understood that the various changes, substitutions, and alterations could be made hereto without departing from the spirit and scope of the invention.

**Claims**

1. A computer-readable, non-transitory recording medium storing a program that causes a first computer to execute a procedure, the procedure comprising:

   selecting, from at least two communication protocols, a first protocol having a shorter transfer time than a second protocol, where the transfer time is predicted based on a number of hops on a communication route from the first computer to a second computer and a size of data from a plurality of communication protocols; and transmitting the data using the first protocol.

**2.** The recording medium according to claim 1, wherein
the procedure further includes causing the first computer to execute:

calculating the number of hops on the communication route from the first computer to the second computer based on information that represents a connection relationship between computers in a group of computers previously stored in an information storage device; and
selecting, from the communication protocols, the first communication protocol having a shorter transfer time than the second communication protocol, where the transfer time is predicted based on the calculated number of hops and the size of the data.

**3.** The recording medium according to claim 1, wherein
the communication protocols includes communication protocols each having a different number of communications between the first computer and the second computer, required until the first computer transmits the data to the second computer.

**4.** The recording medium according to claim 1, wherein
the procedure further includes causing the computer to execute; setting a threshold value to the size of the data, at which a communication protocol is switched to one having a shorter transfer time than that of the other communication protocol in the communication protocols; and
selecting the communication protocol with the smaller shorter transfer time than that of the other communication protocol depending on a large or small relationship between the set threshold value and the data size of the data.

**5.** A communication method comprising:

causing a first computer that uses one of at least two communication protocols to transmit data to a second computer to select a first communication protocol having a shorter transfer time than a second protocol, where the transfer time is predicted based on a number of hops on a communication route from the first computer to the second computer and a data size of the data, and to transmit the data using the first communication protocol.

**6.** A communication system comprising:

A first communication apparatus that transmits data to a second communication apparatus in a group of communication apparatuses; and
an information processing device not included in the group of communication apparatuses, wherein
the information processing device includes a calculating device to calculate a number of hops on a communication route from the first communication apparatus to the second communication apparatus based on information that represents a connection relationship between communication apparatuses in the group of communication apparatuses, stored in an information storage device; and
the communication apparatus includes an acquiring device to acquire the number of hops on the communication route from the first communication apparatus to the second communication apparatus,
a selecting device to select a first communication protocol having a shorter transfer time than a second communication protocol among at least two protocols based on the number of hops acquired by the acquiring device, and
a controlling device to control transmission of the data using the first communication protocol.

**7.** A communication apparatus comprising:

a memory;
a processor; and
a communication interface, wherein
the memory stores a number of hops on a communication route from a first communication apparatus to a second communication apparatus;
the processor selects from at least two communication protocols a first communication protocol having a shorter transfer time than a second communication protocol, where the transfer time is predicted based on the number of hops on the communication route from the first communication apparatus to the second communication apparatus and a data size of the data, and controls transmission of the data using the first communication protocol; and
the communication interface transmits the data to the second communication apparatus based on the control of the processor.

8. A communication system comprising:

a group of communication apparatuses and an information processing device, wherein
the information processing device includes a first processor and a first communication interface, where
the first processor calculates a number of hops on a communication route between communication apparatuses include in the group of communication apparatuses based on a connection relationship between communication apparatuses included in the group of communication apparatuses, and performs control of transmitting the calculated number of hops to the group of communication apparatuses on the first communication interface; and
the communication apparatus included in the group of communication apparatuses includes a second processor and a second communication interface, where
the second processor selects from two or more communication protocols, a first communication protocol having a shorter transfer time than a second communication protocol, where the transfer time is predicted based on the number of hops on the communication route from a first communication apparatus to a second communication apparatus included in the group of communication apparatus, received from the information processing device, and a data size of the data, and
uses the first communication protocol to control transmission of the data to the second communication apparatus on the second communication interface.

FIG. 1

FIG. 2

FIG. 3

FIG. 4

## FIG. 5

# FIG. 6

# FIG. 7

# FIG. 8

# FIG. 9

EP 2 431 885 A1

# FIG. 10

122t

| COMPUTER NUMBER | NUMBER OF HOPS H |
|---|---|
| C1 | 0 |
| C2 | 1 |
| C3 | 2 |
| C4 | 1 |
| ⋮ | ⋮ |

# FIG. 11

```
                    START
                      │
                      ▼
┌──────────────────────────────────┐
│ ACCEPT TRANSMISSION REQUEST FROM  │───── S101
│           APPLICATION             │
└──────────────────────────────────┘
                      │
                      ▼
┌──────────────────────────────────┐
│       ACQUIRE PARAMETER FOR       │───── S102
│  CALCULATION OF THRESHOLD VALUE,  │
│           D_THRESHOLD             │
└──────────────────────────────────┘
                      │
                      ▼
┌──────────────────────────────────┐
│     CALCULATE THRESHOLD VALUE,    │───── S103
│           D_THRESHOLD             │
└──────────────────────────────────┘
                      │
                      ▼
                   S104
         ◇─────────────────────◇           NO
         │ DATA SIZE < D_THRESHOLD ? │──────────────┐
         ◇─────────────────────◇                    │
                      │ YES       S105              │ S106
                      ▼                             ▼
┌──────────────────────────────┐    ┌──────────────────────────────┐
│ TRANSMIT WITH EAGER PROTOCOL │    │   TRANSMIT WITH RENDEZVOUS    │
└──────────────────────────────┘    │           PROTOCOL            │
                      │              └──────────────────────────────┘
                      │◄──────────────────────────┘
                      ▼
                    END
```

# FIG. 12

```
                    START

                      │
                      ▼
        ┌──────────────────────────────┐
        │ ACCEPT RECEPTION REQUEST FROM │ ── S201
        │         APPLICATION          │
        └──────────────────────────────┘
                      │
                      ▼◄─────────────────────────┐
                     S202                         │
                    ╱      ╲          NO          │
                   ╱RECEIVED?╲ ───────────────────┘
                    ╲      ╱
                      │ YES
                      ▼
        ┌──────────────────────────────┐
        │   DECODE CONTROL INFORMATION  │ ── S203
        └──────────────────────────────┘
                      │
                      ▼
                     S204
                    ╱      ╲     RENDEZVOUS
                   ╱PROTOCOL?╲ ─────────────────────┐
                    ╲      ╱                        │
                      │ EAGER    S205               │ S206
                      ▼                             ▼
  ┌──────────────────────────┐   ┌──────────────────────────────┐
  │ EXECUTE RECEPTION PROCESS │   │ EXECUTE RECEPTION PROCESS     │
  │ ACCORDING TO EAGER PROTOCOL│  │ ACCORDING TO RENDEZVOUS       │
  │                          │   │ PROTOCOL                      │
  └──────────────────────────┘   └──────────────────────────────┘
                      │                             │
                      ▼◄────────────────────────────┘
        ┌──────────────────────────────┐
        │    OUTPUT RECEIVED DATA TO    │ ── S207
        │         APPLICATION          │
        └──────────────────────────────┘
                      │
                      ▼
                     END
```

# FIG. 13

20

JOB MANAGEMENT DEVICE

JOB DISTRIBUTION UNIT — 21

HOP NUMBER CALCULATION UNIT — 22

COORDINATE INFORMATION STORAGE UNIT — 23

# FIG. 14

23

| COMPUTER NUMBER | COORDINATE VALUE |
|---|---|
| C1 | (0,0) |
| C2 | (1,0) |
| C3 | (2,0) |
| C4 | (0,1) |
| ⋮ | ⋮ |

# FIG. 15

Ci

COMPUTER

APPLICATION PROCESSING UNIT — 11

TRANSMISSION CONTROL UNIT — 12

THRESHOLD CALCULATION PART — 121

PARAMETER STORAGE PART — 122

PROTOCOL SELECTION PART — 123

E-TRANSMISSION CONTROL PART — 124

R-TRANSMISSION CONTROL PART — 125

INITIALIZATION UNIT — 14

RECEPTION CONTROL UNIT — 13

EP 2 431 885 A1

# FIG. 16

JOB MANAGEMENT APPARATUS ~20

COMPUTER ~Ci

EXECUTION INSTRUCTION OF APPLICATION

S301

S302 SELECTION OF COMPUTER TO BE USED

S303 EXECUTION INSTRUCTION OF APPLICATION

S304 APPLICATION START

S305 INITIALIZATION PROCESS

S306 INQUIRY OF HOP AND SO ON

S307 ACQUISITION OF COORDINATE VALUE

S308 CALCULATION OF NUMBER OF HOPS

S309 HOP NUMBER AND SO ON

S310 RECORDING OF HOP NUMBER

EP 2 431 885 A1

**Europäisches Patentamt**
**European Patent Office**
**Office européen des brevets**

## EUROPEAN SEARCH REPORT

Application Number

EP 11 18 1573

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SUR S ET AL: "Efficient and scalable all-to-all personalized exchange for infiniband-based clusters", PARALLEL PROCESSING, 2004. ICPP 2004. INTERNATIONAL CONFERENCE ON MONTREAL, QC, CANADA 15-18 AUG. 2004, PISCATAWAY, NJ, USA, IEEE, 15 August 2004 (2004-08-15), pages 275-282, XP010718629, ISBN: 978-0-7695-2197-8 * abstract * * sections 1-5 * | 1-8 | INV. G06F13/28 H04L29/08 G06F9/54 |
| X | SUR S ET AL: "High Performance RDMA Based All-to-All Broadcast for InfiniBand Clusters", 1 January 2006 (2006-01-01), HIGH PERFORMANCE COMPUTING - HIPC 2005 LECTURE NOTES IN COMPUTER SCIENCE;;LNCS, SPRINGER, BERLIN, DE, PAGE(S) 148 - 157, XP019040916, ISBN: 978-3-540-30936-9 * sections 1-4 * | 1-8 | |
| A | JP 2002 135264 A (MITSUBISHI ELECTRIC CORP) 10 May 2002 (2002-05-10) * the whole document * | 1-8 | **TECHNICAL FIELDS SEARCHED (IPC)** G06F H04L |

The present search report has been drawn up for all claims

| Place of search | Date of completion of the search | Examiner |
|---|---|---|
| The Hague | 15 December 2011 | Tromparent, Marie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 11 18 1573

This annex lists the patent family members relating to the patent documents cited in the above-mentioned European search report.
The members are as contained in the European Patent Office EDP file on
The European Patent Office is in no way liable for these particulars which are merely given for the purpose of information.

15-12-2011

| Patent document cited in search report | Publication date | Patent family member(s) | Publication date |
|---|---|---|---|
| JP 2002135264 A | 10-05-2002 | NONE | |

For more details about this annex : see Official Journal of the European Patent Office, No. 12/82

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2010209961 A

### Non-patent literature cited in the description

- IBM System Blue Gene Solution: Application Development. June 2007, 5